# EUROPÄISCHE PATENTSCHRIFT

(11) **EP 0 440 860 B1**
(45) Veröffentlichungstag und Bekanntmachung des Hinweises auf die Patenterteilung: **09.06.1993**
(21) Anmeldenummer: 90102495.0
(22) Anmeldetag: 08.02.1990
(51) Int. Cl.: B65G 13/06

(54) **Antriebsrolleneinheit**
Driving roller unit
Unité de galets de propulsion

(43) Veröffentlichungstag der Anmeldung: 14.08.1991
(73) Patentinhaber: BAVARIA CARGO TECHNOLOGIE GMBH, D-80999 München (DE)
(72) Erfinder: Huber, Thomas, D-8127 Iffeldorf (DE)
(74) Vertreter: Bohnenberger, Johannes, Dr.

(56) Entgegenhaltungen:
- DE-A- 3 724 126
- US-A- 3 712 454

## Beschreibung

Die Erfindung betrifft eine Antriebsrolleneinheit zum Antrieb von Gegenständen auf einer Förderbahn, mit einer von einer Elektromotoranordnung über ein Planetengetriebe drehend antreibbaren Antriebsrolle, welche drehbar auf einem Führungskörper gelagert ist, mittels dessen sie bezüglich einer Basis zwischen einer unteren Ruhestellung und einer oberen Antriebsstellung, in der sie mit der Unterseite des anzutreibenden Gegenstands im Eingriff steht, bewegbar ist, wobei die Antriebsrolle im wesentlichen als hohler Kreiszylinder ausgebildet ist und die Elektromotoranordnung, der Führungskörper und das Planetengetriebe im Inneren der hohlzylindrischen Antriebsrolle angeordnet sind, wobei ferner der Führungskörper kreiszylindrische Außenumfangsflächenbereiche aufweist, auf denen die Antriebsrolle konzentrisch gelagert ist, wobei an der Innenseite der hohlzylindrischen Antriebsrolle ein zu ihr konzentrischer Innenzahnkranz drehfest angebracht ist, wobei der Führungskörper um eine bezüglich der Basis ortsfeste, zu seinen kreiszylindrischen Außenumfangsflächenbereichen exzentrische Drehachse drehbar gelagert ist, und wobei der Stator der innerhalb des als Hohlkörper ausgebildeten Führungskörpers angeordneten Elektromotoranordnung fest mit dem Führungskörper verbunden ist.

Eine Antriebsrolleneinheit der vorstehend genannten Art ist bereits aus der DE-A-37 24 126 bekannt. Bei dieser Antriebsrolleneinheit ist der die Feldwicklung enthaltende Stator der Elektromotoranordnung starr und drehfest mit einem Statorgehäuse verbunden, das als Führungskörper dient, dessen kreiszylindrische Außenumfangsfläche exzentrisch zur Drehachse eines Antriebszahnrades angeordnet ist. Bei dieser Ausgestaltung verharrt beim Einschalten der Motoranordnung der im Inneren des Stators angeordnete Rotor wegen seiner Eigenträgheit und wegen eines ihn abbremsenden Untersetzungsgetriebes und einer besonderen Bremse zunächst im Stillstand, so daß das Motordrehmoment die Statoranordnung und damit den durch ihr Gehäuse gebildeten Führungskörper um die bezüglich der Basis ortsfeste Drehachse des mit der Innenverzahnung der Antriebsrolle kämmenden Antriebszahnrades dreht. Dadurch wird wegen der zur Drehachse des Antriebszahnrades exzentrischen Ausbildung des Führungskörpers die darauf gelagerte Antriebsrolle aus ihrer unteren Ruhestellung in die obere Arbeitsstellung bewegt, in der sie zur Anlage am Boden des darüber befindlichen zu fördernden Gegenstands gelangt.

Eine weitere Antriebsrolleneinheit ist aus der US-A-3 698 539 bekannt. Diese bekannte Einheit weist einen am Boden des Frachtraums zu befestigenden Grundrahmen und ein an einem Ende schwenkbar am Grundrahmen gelagertes Lagergestell auf, das in der Nähe der Schwenkachse einen Motor trägt und im Abstand zur Schwenkachse eine drehbar, jedoch bezüglich des Lagergestells ortsfest gelagerte Antriebsrolle, sowie eine mit dem freien Ende des Lagergestells verbundene Nockensteueranordnung, mittels der das Lagergestell bezüglich des Grundrahmens aus der Ruhestellung in die Arbeitsstellung verschwenkbar ist. Die Abtriebswelle des Motors ist über einen Getriebezug mit dem Eingang eines Planetengetriebes gekoppelt, dessen einer Ausgang über eine Getriebeanordnung mit der Antriebswelle der Antriebsrolle gekoppelt ist, während der andere Ausgang des Planetengetriebes die Nockensteuereinheit antreibt.

Im Ruhezustand liegt das Lagergestell auf dem Grundrahmen auf, so daß die Antriebsrolle abgesenkt im Abstand zum Boden eines darüber auf einer Rollförderbahn herangeführten Frachtbehälters steht. Um den Frachtbehälter auf der Rollenbahn in Bewegung zu setzen, wird zunächst der Motor eingeschaltet, der den Eingang des Planetengetriebes antreibt. Zu diesem Zeitpunkt wird die Antriebsrolle mittels einer Rutschkupplung mit einem vorbestimmten Bremsdrehmoment gegen Drehung festgehalten, so daß das Antriebsmoment des Motors zwangsläufig über den anderen Ausgang des Planetengetriebes auf die Nockensteuereinheit einwirkt, die dadurch mit ihren Nocken, die sich an dem Grundrahmen abstützen, das Lagergestell nach oben in die Arbeitsstellung schwenkt, bis die Antriebsrolle in Eingriff mit der Unterseite des Bodens des Frachtbehälters gelangt. Wegen des Gewichts des Frachtbehälters wird dadurch die Bewegung der Nockensteuereinheit blockiert und die Antriebsrolle wird gegen den Behälterboden gedrückt. Dadurch aber wird auch der die Nockensteuereinheit treibende Ausgang des Planetengetriebes blockiert, so daß der die Antriebsrolle antreibende andere Ausgang des Planetengetriebes an die Antriebsrolle ein Bremsmoment überträgt, das das Bremsdrehmoment der Rutschkupplung überwindet, so daß die an dem Behälterboden angedrückte Antriebsrolle sich zu drehen beginnt und der Behälter in einer von der Drehrichtung des Antriebsmotors abhängigen Richtung vorwärts bewegt wird.

Problematisch ist dabei in der Praxis, daß die gesamte Getriebeanordnung vom Motor zur Antriebsrolle einerseits und zur Nockensteuerung andererseits sehr aufwendig gestaltet ist und viele Teile aufweist. Überdies ist eine Nockensteuerung erforderlich, so daß der Gesamtaufbau eine große Anzahl von mechanisch bewegten Teilen enthält. Dadurch ergeben sich nicht nur bei der Herstellung hohe Kosten, sondern auch ein gerade im Flugzeugbau unerwünschtes hohes Gewicht und eine große Bauform. Zudem führt die große Anzahl von zueinander bewegten Teilen zu Verschleißanfälligkeit und es sind kurze Wartungsintervalle erforderlich, um die im Flugzeugbetrieb geforderte hohe Zuverlässigkeit zu gewährleisten.

Vor allem liegen bei dieser bekannten Antriebsrolleneinheit die einzelnen Bauteile mehr oder weniger ungeschützt nebeneinander, so daß im Betrieb nicht nur mit Verschmutzung und dadurch hervorgerufenen Betriebsstörungen zu rechnen ist, sondern auch mit Beschädigungen durch eingedrungene Gegenstände oder durch direkte Krafteinwirkung.

Eine von Aufbau und Betriebsweise ähnliche Antriebsrolleneinheit ist ferner aus EP-B1-0 149 658 bekannt, bei der neben großer Bauform ebenfalls im Betrieb Probleme durch eindringende Fremdkörper oder durch Gewalteinwirkung auftreten können.

Die der Erfindung zugrundeliegende Aufgabe besteht somit darin, eine Antriebsrolleneinheit der eingangs genannten Gattung zu schaffen, deren Zuverlässigkeit verbessert und deren konstruktiver Aufbau vereinfacht sind.

Gemäß der Erfindung wird diese Aufgabe bei einer Antriebsrolleneinheit der eingangs genannten Gattung dadurch gelöst, daß der Innenzahnkranz der Antriebsrolle als ein Kronenrad des Planetengetriebes ausgebildet ist, daß ein Planetenrad des Planetengetriebes einerseits mit dem Innenzahnkranz und andererseits mit einem von der Elektromotoranordnung angetriebenen Sonnenrad des Planetengetriebes kämmt, daß der Planetenträger dieses Planetenrad im Führungskörper konzentrisch zu dessen kreiszylindrischen Außenumfangsfächenbereichen drehbar gelagert ist, daß der Planetenträger mit einer zu den kreiszylindrischen Außenumfangsflächenbereichen des Führungskörpers konzentrischen Verzahnung versehen ist, und daß diese Verzahnung in kämmendem Eingriff mit einem mit der Basis starr und drehfest verbundenen, zur exzentrischen Drehachse des Führungskörpers konzentrischen Führungszahnrad steht.

Bei dieser erfindungsgemäßen Ausgestaltung sind alle beweglichen Teile, nämlich der Antriebsmotor, der Führungskörper und das Planetengetriebe im Inneren der hohlzylindrischen Antriebsrolle untergebracht, so daß alle diese Elemente gegen Verschmutzung und Beschädigung geschützt sind.

Durch die Erfindung wird gegenüber dem Stand der Technik zusätzlich eine Vereinfachung des Aufbaus durch Wegfall der beim eingangs genannten Stand der Technik notwendigen Getriebeanordnung, insbesondere des Antriebszahnrades und der Bremse erreicht.

Bei einer erfindungsgemäßen Ausgestaltung ist es möglich, daß der Rotor und der Stator der Elektromotoranordnung konzentrisch zueinander und konzentrisch zu den kreiszylindrischen Außenumfangsflächenbereichen des Führungskörpers angeordnet werden. Dadurch ergibt sich eine besonders gute Raumausnutzung im Inneren der hohlzylindrischen Antriebsrolle und des als Hohlkörper ausgebildeten Führungskörpers, so daß bei vorgegebenen Außenabmessungen der Antriebsrolleneinheit ein besonders großer und damit auch sehr leistungsstarker Motor untergebracht werden kann.

Bevorzugt ist vorgesehen, daß die Verzahnung des Planetenträgers als das Führungszahnrad exzentrisch umgreifender, zu den kreiszylindrischen Außenumfangsflächenbereichen des Führungskörpers konzentrischer Innenzahnkranz ausgebildet ist. Bei dieser Ausführungsform ist es vorteilhaft, daß an dem mit dem Innenzahnkranz ausgebildeten Planetenträger während der Abwälzbewegung um das Führungszahnrad herum nur gegeringe Kippmomente auftreten, so daß die Lager des Planetenträgers im Führungskörper nur gering belastet sind.

Alternativ kann vorgesehen sein, daß die Verzahnung des Planetenträgers als sich auf dem Führungszahnrad abwälzende, zu den kreiszylindrischen Außenumfangsflächenbereichen des Führungskörpers konzentrische Außenverzahnung ausgebildet ist. Diese Ausführungsform zeichnet sich durch einfache und kostengünstige Herstellbarkeit aus, da die Außenverzahnung des Planetenträgers als herkömmliches Zahnrad ausgebildet sein kann, das starr und drehfest mit dem Planetenträger verbunden ist.

Normalerweise liegt bei den vorstehend erläuterten Ausführungsformen der erfindungsgemäßen Antriebsrolleneinheit der anzutreibende Gegenstand, beispielsweise der Frachtcontainer, auf der in Ruhestellung befindlichen Antriebsrolle auf und hält diese mit einem durch das Gewicht des Gegenstands bestimmten Bremsmoment fest. Die Antriebsrolle wird dadurch beim Einschalten gegen Drehung abgebremst und drückt daher aus ihrer unteren Ruhestellung in ihre obere Arbeitsstellung gegen den Boden des Frachtbehälters, so daß die gewünschte Hebebewegung der Antriebsrolle aus der unteren Ruhestellung in die obere Arbeitsstellung allein durch das Bremsmoment des aufliegenden Gegenstands erreicht wird. Sofern es erwünscht ist, daß sich die Antriebsrolle auch ohne aufliegenden Gegenstand beim Einschalten in die Arbeitsstellung nach oben bewegt, kann vorgesehen sein, daß die Drehung der Antriebsrolle mit einem definierten Bremsmoment belastet ist. Vorteilhafterweise sieht man hierzu vor, daß die Lager der Antriebsrolle auf dem Führungskörper die Drehung der Antriebsrolle relativ zum Führungskörper mit einer vorbestimmten Bremskraft abbremsen. Diese Bremskraft wirkt im gleichen Sinne wie das Bremsmoment eines zu fördernden Gegenstands und hat daher die gleiche Funktion, nämlich beim Einschalten die Antriebsrolle aus der unteren Ruhestellung in die obere Antriebsstellung zu heben und gegen die Unterseite des zu fördernden Gegenstands anzudrücken.

Die Erfindung wird im folgenden beispielsweise unter Bezugnahme auf die Zeichnung näher erläutert; es zeigt:
- Fig. 1: einen stark schematisiert dargestellten vertikalen Längsquerschnitt einer ersten Ausführungsform einer Antriebsrolleneinheit;
- Fig. 2: einen vereinfachten Längsquerschnitt einer praktischen Ausführungsform des ersten Ausführungsbeispiels einer Antriebsrolleneinheit gemäß Fig. 1; und
- Fig. 3: einen stark schematisiert dargestellten vertikalen Längsquerschnitt einer zweiten Ausführungsform einer Antriebsrolleneinheit;

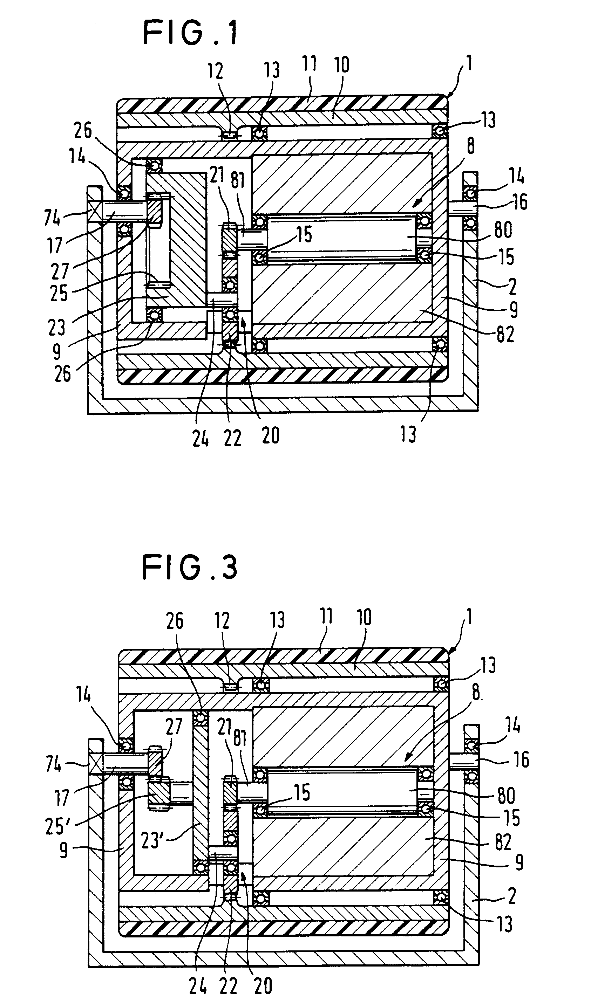

Mit Bezug auf die Fig. 1 werden zunächst der grundsätzliche Aufbau und die Funktionsweise der ersten Ausführungsform einer erfindungsgemäßen Antriebsrolleneinheit erläutert. Die Fig. 1 ist zum Zweck der Erläuterung und zum besseren Verständnis des Grundprinzips sehr stark vereinfacht und schematisiert dargestellt.

Wie in der Fig. 1 gezeigt ist, besteht die Antriebsrolleneinheit grundsätzlich aus einer in etwa als hohler Kreiszylinder ausgebildeten Antriebsrolle 1, in deren Innenraum ein Führungskörper 9, eine Motoranordnung 8, ein Planetengetriebe 20 und ein Führungszahnrad 27 aufgenommen sind. Die Motoranordnung 8 ist über das Planetengetriebe 20 antriebsmäßig mit dem Führungskörper 9 bzw. der Antriebsrolle 1 gekoppelt. Die gesamte Antriebsrolleneinheit ist in einer Basis 2 gehaltert, welche in einer Rollenförderbahn fixiert ist oder einen Bestandteil einer Rollenförderbahn darstellt. Der Führungskörper 9 besitzt eine im wesentlichen kreiszylindrische Außenoberfläche, auf der die Antriebsrolle 1 mittels der Wälzlager 13 drehbar gelager ist. Dieser Führungskörper 9 ist auf dem in der Fig. 1 rechten axialen Ende auf einem Lagerzapfen 16 und auf seinem in der Fig. 1 linken axialen Ende auf einem Lagerzapfen 17 mittels der Wälzlager 14 um eine zu seiner zylindrischen Außenoberfläche exzentrische Drehachse bezüglich der Basis 2 drehbar gelagert. Der Führungskörper 9 ist als Hohlkörper ausgebildet, wobei im rechten Teil seines Innenraums die Elektromotoranordnung 8 aufgenommen ist. Diese Elektromotoranordnung 8 umfaßt einen fest mit dem Führungskörper 9 verbundenen Stator 82, der die Feldwicklung der Elektromotoranordnung 8 enthält, welche über eine (nicht dargestellte) Kontaktanordnung aus Schleifringen und Schleifkontakten mit der Stromversorgung der Basis 2 verbunden ist. Der Stator 82 ist konzentrisch zur kreiszylindrischen Außenoberfläche des Führungskörpers 9 angeordnet und innerhalb des Stators 82 ist wiederum konzentrisch zu dieser Außenoberfläche ein mittels der Wälzlager 15 im Stator 82 drehbar gelagerter Rotor 80 vorgesehen, dessen in der Fig. 1 linkes Ende der Rotorwelle 81 das Sonnenrad 21 des Planetengetriebes 20 drehfest trägt.

Das Planetengetriebe 20 weist wenigstens ein Planetenrad 22 auf, das auf einem Lagerzapfen 24 des Planetenträgers 23 drehbar gelagert ist und einerseits mit dem Sonnenrad 21 und andererseits mit einer als Kronenrad des Planetengetriebes 20 ausgebildeten Innenverzahnung 12 der Antriebsrolle 1 kämmt.

Der Planetenträger 23 ist innerhalb des Führungskörpers 9 mittels des Lagers 26 konzentrisch zu den kreiszylindrischen Außenumfangsflächenbereichen des Führungskörpers 9 drehbar gelagert. In dem in der Fig. 1 linken Abschnitt des Planetenträgers 23 ist eine Ausnehmung gebildet, in welcher eine als Innenzahnkranz ausgebildete Verzahnung 25 geformt ist, die ebenfalls zu den kreiszylindrischen Außenumfangsflächenbereichen des Führungskörpers 9 konzentrisch ist. Diese Verzahnung 25 steht in kämmendem Eingriff mit einem Führungszahnrad 27, das drehfest mit dem Lagerzapfen 17 verbunden ist und zur Drehachse des Führungskörpers 9 konzentrisch ist.

Die Antriebsrolle 1 besteht aus einem inneren, im wesentlichen als Hohlzylinder ausgebildeten Rollenkörper 10 und einem die Außenoberfläche des Rollenkörpers 10 bedeckenden Rollenmantel 11 aus elastischem Material. In der in der Fig. 1 linken Hälfte ist an der inneren Oberfläche des etwa hohlzylindrischen Rollenkörpers 10 ein Innenzahnkranz 12 angeformt oder angebracht, der konzentrisch mit dem Rollenkörper 10 ausgebildet ist und der mit dem Planetenrad 22 des Planetengetriebes 20 im kämmenden Eingriff steht. Die Antriebsrolle 1 ist mittels der Lager 13, die als Nadel- oder Kugellager ausgebildet sind, konzentrisch auf und zu der kreiszylindrischen Außenoberfläche des Führungskörpers 9 drehbar gelagert, wobei diese Außenoberfläche des Führungskörpers bezüglich der Drehachse des Führungskörpers 9 an der Basis 2 exzentrisch angeordnet ist. Dadurch wird einerseits der kämmende Eingriff des Planetenrads 22 mit dem Innenzahnkranz 12 ständig sichergestellt und andererseits zugleich die exzentrische Anordnung der Antriebsrolle 1 und des Innenzahnkranzes 12 bezüglich der Drehachse des Führungskörpers 9 gewährleistet.

Die Fig. 1 zeigt die Ruhestellung der Antriebsrolle im abgesenkten Zustand, in dem sie außer Eingriff mit einem auf der zugehörigen Rollenförderbahn ruhenden, zu fördernden Gegenstand (nicht gezeigt) sein kann.

Wenn nun ausgehend von diesem Ruhezustand die Stromzufuhr zur Elektromotoranordnung 8 eingeschaltet wird, wirkt zwischen dem Rotor 80 und dem Stator 82 wie bei jedem anderen Elektromotor ein Drehmoment. Wegen der größeren Eigenträgheit des Stators 82 und des mit ihm verbundenen Führungskörpers beginnt zunächst der Rotor 80 sich zu drehen, wobei er das Sonnenrad 21 des Planetengetriebes 20 drehend antreibt. Dieses Sonnenrad treibt das Planetenrad 22 an, das im kämmendem Eingriff mit dem als Kronenrad ausgebildeten Innenzahnkranz 12 der Antriebsrolle steht. Wegen der Eigenträgheit der Antriebsrolle 1 und der Lagerreibung der Lager 13 gegenüber dem Führungskörper 9 verharrt die Antriebsrolle 1 zunächst im Stillstand. Es muß sich daher das Planetenrad 22 zwangsläufig auf dem noch stillstehenden Innenzahnkranz 12 der Antriebsrolle 1 abwälzen. Da das Planetenrad 22 auf dem Lagerzapfen 24 des im Führungskörper 9 drehbar gelagerten Planetenträgers 23 gelagert ist, nimmt es bei dieser Abwälzbewegung zwangsläufig den Planetenträger 23 mit. Der Planetenträger wälzt sich dadurch mit seiner Verzahnung 25 um das Führungszahnrad 27 herum und nimmt dabei über sein Lager 26 den Führungskörper 9 mit. Da der Führungskörper 9 exzentrisch gelagert ist, hebt sich seine obere Außenumfangsfläche bezüglich der Basis 2 nach oben und nimmt dabei die darauf gelagerte Antriebsrolle 1 mit. Die Antriebsrolle 1 wird dadurch aus ihrer unteren Ruhestellung in die obere Antriebsstellung gebracht und dabei an die Unterseite des anzutreibenden Gegenstands angepreßt. Wegen des Gewichts dieses Gegenstands wird die Weiterbewegung der Antriebsrolle 1 und damit auch des Führungskörpers 9 nach oben blockiert. Durch diese Blockierung kann sich nun das Planetenrad 22 nicht länger auf dem Innenzahnkranz 12 der Antriebsrolle 1 abwälzen. Es muß beginnen, sich stationär zu drehen, so daß zwangsweise auf die Antriebsrolle 1 ein so großes Antriebsdrehmoment ausgeübt wird, daß das Bremsmoment der Lagerreibung der Lager 13 gegenüber dem Führungskörper 9 überwunden wird und die Antriebsrolle 1 sich in Drehung versetzt. Diese Drehung der Antriebsrolle 1, die gegen die Unterseite des zu fördernden Gegenstands angepreßt ist, übt eine Tangentialkraft auf den zu fördernden Gegenstand aus, so daß sich dieser, wie gewünscht, in Bewegung setzt.

Bei der vorstehend beschriebenen Funktionsweise ist es von höchster Wichtigkeit, daß der Drehsinn des Planetenrades 22 und der Antriebsrolle 1 in Bezug zur Transportrichtung des zu fördernden Gegenstands derart gewählt sind, daß der anzutreibende Gegenstand in der Antriebsstellung, in der die Antriebsrolle 1 gegen die Unterseite des Gegenstands angepreßt ist, ein auf seiner Eigenträgheit bzw. Reibungskräften beruhendes Bremsmoment auf die Antriebsrolle 1 in der gleichen Richtung ausübt, wie dies auch die Lagerreibung der Lager 13 ausgehend von der Ruhestellung bewirkt. Nur auf diese Weise ist sichergestellt, daß die hemmende Bremswirkung des zu fördernden Gegenstands bewirkt, daß die Antriebsrolle 1 gegen den Boden dieses Gegenstands in der gleichen Weise angepreßt wird, wie dies anfänglich durch die Lagerreibung bewirkt wurde. Die Wahl eines falschen Drehsinnes des Planetenrads 22 und des Innenzahnkranzes 12 der Antriebsrolle 1 würde diese selbsthaltende Funktion der Antriebsrolle in der oberen Ruhestellung verhindern.

Hier ist anzumerken, daß die Lagerreibung der Lager 13 bei bestimmten Anwendungsfällen auch unberücksichtigt bleiben kann. Es sei angenommen, daß die Ruhestellung der Antriebsrolle 1 derart gewählt ist, daß ein zu fördernder Gegenstand in dieser Ruhestellung, im ausgeschalteten Zustand der Elektromotoranordnung 8, bereits auf der Oberfläche der Antriebsrolle 1 aufliegt. Wenn in diesem Zustand die Elektromotoranordnung 8 eingeschaltet wird, dann übt der auf der Antriebsrolle 1 ruhende Gegenstand durch seine Eigenträgheit ein so starkes Bremsmoment aus, daß zunächst die beschriebene Abwälzbewegung des Planetenrades 22 am Innenzahnkranz 12 stattfindet und das Planetenrad 22 über den Planetenträger 23 und dessen Abwälzbewegung auf dem Führungszahnrad 27 den Führungskörper 9 um seine exzentrische Drehachse zusammen mit der Antriebsrolle 1 nach oben zu schwenken versucht. Diese Schwenkbewegung wird durch die Elastizität des Rollenmantels 11 ermöglicht und begrenzt; sie führt dazu, daß die Antriebsrolle 1 gegen die Unterseite des zu fördernden Gegenstands angepreßt wird, so daß eine weitere Schwenkbewegung unterbunden wird und das Planetenrad 22 die Antriebsrolle 1 in der beschriebenen Weise in Drehung versetzt.

Wenn nun ausgehend von diesem Antriebs-Betriebszustand die Stromzuführung zur Elektromotoranordnung 8 abgeschaltet wird, kommt der Rotor 80 der Elektromotoranordnung 8 bezüglich des Stators 82 zum Stillstand, so daß das auf die Antriebsrolle 1 von dem Planetenrad 22 ausgeübte Drehmoment wegfällt und auch das den Führungskörper 9 nach oben drehende Antriebsdrehmoment. Wegen der exzentrischen Drehachse des Führungskörpers 9 und der dadurch gegebenen asymmetrischen Massenverteilung bezüglich dieser Drehachse schwenkt daher der Führungskörper 9 in seine in der Fig. 1 gezeigte Ruhestellung zurück und nimmt bei dieser Schwenkbewegung die Antriebsrolle 1 nach unten mit, so daß diese wieder außer Eingriff mit dem Boden des zu fördernden Gegenstands gelangt oder zumindest nicht mehr gegen den Boden des Gegenstands angedrückt wird.

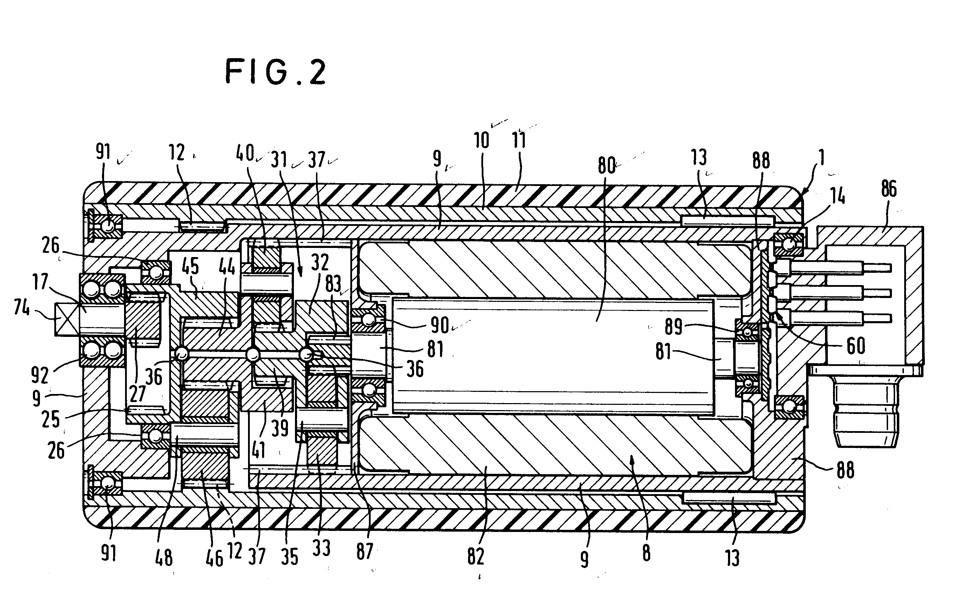

Nachstehend wird nun mit Bezug auf die Fig. 2 eine in vielen Einzelheiten vereinfacht dargestellte praktische Ausführungsform des ersten Ausführungsbeispiels der erfindungsgemäßen Antriebsrolleneinheit beschrieben.

Wie in der Fig. 2 gezeigt ist, umfaßt diese Ausführungsform der Antriebsrolleneinheit eine äußere, etwa hohlzylindrische Antriebsrolle 1, die mittels der Wälzlager 13 und 91 auf kreiszylindrischen Außenumfangsflächenbereichen des Führungskörpers 9 drehbar gelagert ist. Im Innenraum des als Hohlkörper ausgebildeten Führungskörpers 9 sind eine in der Fig. 2 im rechten Teil angeordnete Elektromotoranordnung 8, ein sich nach links davon anschließendes Planetengetriebe 31 und ein sich wiederum links davon anschließendes Führungszahnrad 27 vorgesehen, das mit einer Verzahnung 25 eines Planetenträgers des Planetengetriebes 31 kämmt.

Die Elektromotoranordnung 8 umfaßt einen die (nicht dargestellte) Feldwicklung enthaltenden Stator 82 und einen konzentrisch innerhalb des Stators 82 in Wälzlagern 89 bzw. 90 drehbar gelagerten Rotor 80. Der Stator 82 ist konzentrisch zu den kreiszylindrischen Außenumfangsflächenbereichen des Führungskörpers 9 angeordnet und fest mit dem Führungskörper 9 verbunden. Seine Stromzuführung erfolgt über eine nur schematisch angedeutete Kontaktanordnung 60 aus Schleifringen und Schleifkontakten. Diese Kontaktanordnung 60 ist über ein fest mit der Basis verbundenes Anschlußgehäuse 86 mit der Stromversorgung der Basis verbunden.

Zur Lagerung des Rotors 80 ist im Inneren des Führungskörpers 9 und fest mit diesem verbunden auf der in der Fig. 2 rechten Seite ein etwa radialer Lagerflansch 88 angeordnet, in welchem das rechte Ende der Rotorwelle 81 des Rotors 80 der Elektromotoranordnung 8 über ein Wälzlager 89 gelagert ist. Das linke Ende der Rotorwelle 81 ist über das Wälzlager 90 in einem weiteren Lagerflansch 87 gelagert, der ebenfalls mit dem Führungskörper 9 verbunden ist.

Das Anschlußgehäuse 86 ist als Hohlkörper ausgebildet, der einerseits zur Befestigung an der Basis dient und andererseits zur Stromzuführung zur Feldwicklung des Stators 82 der Elektromotoranordnung 8. Im Inneren dieses Hohlkörpers können verschiedene Komponenten aufgenommen sein, wie beispielsweise ein Thermoschutzschalter, ein Anschlußstecker zur Stromverbindung mit der Basis und die bereits erwähnte Kontaktanordnung 60 zur Stromzufuhr zu dem bezüglich der Basis drehbaren bzw. schwenkbaren Stator 82.

Der die Elektromotoranordnung 8 umhüllende Führungskörper 9 ist auf dem in der Fig. 2 rechten axialen Ende mittels des Wälzlagers 14 über das Anschlußgehäuse 86 bezüglich der Basis drehbar gelagert. Das in der Fig. 2 linke axiale Ende des Führungskörpers 9 ist über das Wälzlager 92 auf einem Lagerzapfen 17 drehbar gelagert, der mittels eines Vierkants 74 drehfest mit der Basis verbindbar ist. Die durch die Wälzlager 92 und 14 vorgegebene Drehachse des Führungskörpers 9 ist bezüglich der kreiszylindrischen Außenumfangsoberflächenbereiche des Führungskörpers 9, auf denen die Antriebsrolle 1 mittels der Wälzlager 13 und 91 drehbar gelagert ist, exzentrisch.

Die Antriebsrolle 1 ist im wesentlichen als hohler Kreiszylinder ausgebildet, der den Führungskörper 9 umgibt. Die Antriebsrolle 1 besteht aus einem Rollenkörper 10 und einem die Außenfläche des Rollenkörper 10 bedeckenden Rollenmantel 11, der fest mit dem Rollenkörper 10 verbunden ist. Der Rollenmantel 11 besteht aus einem abriebfesten elastischen Kunststoff, während der Rollenkörper 10 aus Metall geformt ist. In der Nähe der beiden axialen Stirnenden des Rollenkörpers 10 ist jeweils an der Innenseite des Rollenkörpers 10 ein Wälzlager 13 bzw. 91 angeordnet, mit denen der Rollenkörper 10 drehbar auf den kreiszylindrischen Außenumfangsflächenbereichen des Führungskörpers 9 gelagert ist. Der in der Fig. 2 linke Abschnitt der Innenseite des Rollenkörpers 10 ist mit einem Innenzahnkranz 12 versehen, der konzentrisch zur Längsachse des hohlzylindrischen Rollenkörpers 10 und zu den Außenumfangsflächenbereichen des Führungskörpers 9 angeordnet ist.

Im Innenraum des als Hohlkörper ausgebildeten Führungskörpers 9 ist in der Fig. 2 links von dem die Rotorwelle 81 lagernden Lagerflansch 87 ein Planetengetriebe 31 mit drei in Axialrichtung aufeinanderfolgenden Getriebestufen vorgesehen. Die ausgehend von der Rotorwelle 81 ersten beiden Getriebestufen dienen lediglich der Drehzahluntersetzung, während die dritte Getriebestufe die für die Arbeitsweise der Rollenantriebseinheit wichtige Funktion der Schwenkung der Antriebsrolle 1 aus der Ruhestellung in die Antriebsstellung und des Drehantriebs der Antriebsrolle 1 bewirkt, wie bereits vorstehend mit Bezug auf die Fig. 1 beschrieben. Das bedeutet, daß das in der Fig. 1 schematisch dargestellte Planetengetriebe 20 der dritten Stufe (in der Fig. 2 ganz links gelegen) des Planetengetriebes 31 entspricht.

Die ersten beiden Stufen des Planetengetriebes 31 sind von ihrer Funktion her in herkömmlicher Weise aufgebaut, so daß für den Fachmann die kurze nachfolgende Beschreibung genügt. Das Planetengetriebe 31 umfaßt in der ersten Stufe einen Planetenträger 32, an den mittels Lagerzapfen 35 drei Planetenräder 33 gelagert sind, die auf einem Sonnenrad umlaufen, welches durch eine Außenverzahnung 83 auf dem linken Ende der Rotorwelle 81 gebildet ist.

Axial nach links in der Fig. 2 ist an dem ersten Planetenträger 32 und einstückig mit diesem das Sonnenrad 39 der zweiten Getriebestufe angeformt, auf dem wiederum die auf Lagerzapfen am Planetenträger 41 gelagerten Planetenräder 40 umlaufen. Am zweiten Planetenträger 41 ist ebenfalls nach links in der Fig. 3 das Sonnenrad 44 der dritten Getriebestufe einstückig angeformt, auf dem die Planetenräder 46 dieser dritten Getriebestufe umlaufen, die mit Lagerzapfen 48 am Planetenträger 45 drehbar gelagert sind. Jeweils zwischen der linken Stirnfläche eines Sonnenrads und der nach links folgenden zugewandten Fläche des jeweiligen Planetenträgers ist eine Lagerkugel 36 angeordnet, die eine freie und reibungsarme Drehbarkeit dieser benachbarten Teile zueinander gewährleistet.

Die Planetenräder 33 und 40 der ersten und zweiten Getriebestufe stehen jeweils in kämmendem Eingriff mit einem sie umgebenden Kronenrad 37, das als Innenverzahnung des Führungskörpers 9 ausgebildet ist.

Wie bereits erwähnt, ist die dritte Getriebestufe des Planetengetriebes 31 abweichend von der ersten und zweiten Getriebestufe ausgebildet. Die Planetenräder 46 (von denen in der Zeichnung nur eines dargestellt ist) der dritten Getriebestufe stehen nämlich einerseits mit dem Sonnenrad 44 und andererseits mit dem als Kronenrad ausgebildeten Innenzahnkranz 12 der Antriebsrolle in kämmendem Eingriff, wie es mit Bezug auf die Fig. 1 für das Planetengetriebe 20 ausführlich erläutert wurde.

Der Planetenträger 45 der dritten Getriebestufe ist mittels des Wälzlagers 26 im Führungskörper 9 konzentrisch zu dessen kreiszylindrischen Außenumfangsflächenbereichen drehbar gelagert. Dieser Planetenträger 45 ist mit einer Verzahnung 25 ausgestattet, die bei dem vorliegenden Ausführungsbeispiel als Innenzahnkranz in einer Ausnehmung in dem in der Fig. 2 linken Abschnitt des Planetenträgers 45 ausgebildet ist. Die Verzahnung 25 ist konzentrisch mit den kreiszylindrischen Außenumfangsflächenbereichen des Führungskörpers 9 ausgebildet und umgreift exzentrisch ein Führungszahnrad 27, mit dem die Verzahnung 25 in ständig kämmendem Eingriff steht. Das Führungszahnrad 27 ist starr und drehfest mit dem Lagerzapfen 17 und damit auch mit der Basis verbunden.

Die Funktionsweise des soeben beschriebenen Ausführungsbeispiels wurde prinzipiell bereits ausführlich mit Bezug auf die schematische Darstellung der Fig. 1 erläutert. Wesentlich für die erwünschte Funktion ist, daß der Führungskörper 9 um eine Drehachse drehbar gelagert ist, die bezüglich seiner Außenumfangsflächenbereiche, auf denen die Antriebsrolle 1 konzentrisch gelagert ist, exzentrisch angeordnet ist. Ferner ist es von Bedeutung, daß der Stator 82 der Elektromotoranordnung 8 fest mit dem Führungskörper 9 verbunden ist, daß der Innenzahnkranz 12 der Antriebsrolle 1 das Kronenrad der dritten Getriebestufe 31 darstellt, daß der Planetenträger 45 der dritten Getriebestufe des Planetengetriebes 31 drehbar im Führungskörper 9 gelagert ist und daß die Verzahnung 25 dieses Planetenträgers 45 das Führungszahnrad 27 exzentrisch umgibt. Durch das letztgenannte Merkmal wird erreicht, daß bei der Abwälzbewegung des Planetenträgers 45 beim Einschalten der Elektromotoranordnung 8 eine Schwenkbewegung des Führungskörpers 9 und damit der Antriebsrolle 1 aus der unteren Ruhestellung in die obere Antriebsstellung erfolgt.

In der Fig. 3 ist sehr vereinfacht und schematisch dargestellt eine zweite Ausführungsform einer erfindungsgemäßen Rollenantriebseinheit gezeigt. In dieser Fig. 3 sind für Teile, die den entsprechenden Teilen der ersten Ausführungsform der Fig. 1 und 2 entsprechen, die gleichen Bezugszeichen verwendet, wobei gegenüber der Fig. 1 unterschiedliche Teile mit der gleichen Bezugszahl und einem Apostroph bezeichnet sind.

Die zweite Ausführungsform gemäß der Fig. 3 unterscheidet sich von der Ausführungsform der Fig. 1 und 2 im wesentlichen ausschließlich nur dadurch, daß die Verzahnung 25' des Planetenträgers 23' als Außenverzahnung ausgebildet ist, also als Zahnrad, das starr und drehfest mit dem Planetenträger 23' verbunden ist und das sich auf dem Führungszahnrad 27 bei der Schwenkbewegung von der unteren Ruhestellung in die obere Arbeitsstellung dar Antriebsrolleneinheit abwälzt.

Da dies der einzige wesentliche Unterschied zur ersten Ausführungsform ist und sich im übrigen die Funktionsweise nicht von der bereits beschriebenen Funktionsweise unterscheidet, ist für den Fachmann eine weitergehende Erläuterung überflüssig.

## Patentansprüche

1. Antriebsrolleneinheit zum Antrieb von Gegenständen auf einer Förderbahn mit einer von einer Elektromotoranordnung (8) über ein Planetengetriebe (20) drehend antreibbaren Antriebsrolle (1), welche drehbar auf einem Führungskörper (9) gelagert ist, mittels dessen sie bezüglich einer Basis (2) zwischen einer unteren Ruhestellung und einer oberen Antriebsstellung, in der sie mit der Unterseite des anzutreibenden Gegenstands im Eingriff steht, bewegbar ist, wobei die Antriebsrolle (1) im wesentlichen als hohler Kreiszylinder ausgebildet ist und die Elektromotoranordnung (8), der Führungskörper (9) und das Planetengetriebe (20) im Inneren der hohlzylindrischen Antriebsrolle (1) angeordnet sind, wobei ferner der Führungskörper (9) kreiszylindrische Außenumfangsflächenbereiche aufweist, auf denen die Antriebsrolle (1) konzentrisch gelagert ist, wobei an der Innenseite der hohlzylindrischen Antriebsrolle (1) ein zu ihr konzentrischer Innenzahnkranz (12) drehfest angebracht ist, wobei der Führungskörper (9) um eine bezüglich der Basis (2) ortsfeste, zu seinen kreiszylindrischen Außenumfangsflächenbereichen exzentrische Drehachse drehbar gelagert ist, und wobei der Stator (82) der innerhalb des als Hohlkörper ausgebildeten Führungskörpers (9) angeordneten Elektromotoranordnung (8) fest mit dem Führungskörper (9) verbunden ist, dadurch **gekennzeichnet**, daß der Innenzahnkranz (12) der Antriebsrolle (1) als ein Kronenrad des Planetengetriebes (20) ausgebildet ist, daß ein Planetenrad (22) des Planetengetriebes (20) einerseits mit dem Innenzahnkranz (12) und andererseits mit einem von der Elektromotoranordnung (8) angetriebenen Sonnenrad (21) des Planetengetriebes (20) kämmt, daß der Planetenträger (23, 23') dieses Planetenrads (22) im Führungskörper (9) konzentrisch zu dessen kreiszylindrischen Außenumfangsflächenbereichen drehbar gelagert ist, daß der Planetenträger (23, 23') mit einer zu den kreiszylindrischen Außenumfangsflächenbereichen des Führungskörpers (9) konzentrischen Verzahnung (25, 25') versehen ist und daß diese Verzahnung (25, 25') in kämmendem Eingriff mit einem mit der Basis (2) starr und drehfest verbundenen, zur exzentrischen Drehachse des Führungskörpers (9) konzentrischen Führungszahnrad (27) steht.

2. Antriebsrolleneinheit nach Anspruch 1, dadurch **gekennzeichnet**, daß der Rotor (80) und der Stator (82) der Elektromotoranordnung (8) konzentrisch zueinander und konzentrisch zu den kreiszylindrischen Außenumfangsflächenbereichen des Führungskörpers (9) angeordnet sind.

3. Antriebsrolleneinheit nach einem der Ansprüche 1 oder 2, dadurch **gekennzeichnet**, daß die Verzahnung (25) des Planetenträgers (23) als das Führungszahnrad (27) exzentrisch umgreifender, zu den kreiszylindrischen Außenumfangsflächenbereichen des Führungskörpers (9) konzentrischer Innenzahnkranz ausgebildet ist. (Fig. 1)

4. Antriebsrolleneinheit nach einem der Ansprüche 1 oder 2, dadurch **gekennzeichnet**, daß die Verzahnung (25') des Planetenträgers (23') als sich auf dem Führungszahnrad (27) abwälzende, zu den kreiszylindrischen Außenumfangsflächenbereichen des Führungskörpers (9) konzentrische Außenverzahnung ausgebildet ist. (Fig. 3)

5. Antriebsrolleneinheit nach einem der vorhergehenden Ansprüche, dadurch **gekennzeichnet**, daß die Lager (13) der Antriebsrolle (1) auf dem Führungskörper (9) die Drehung der Antriebsrolle (1) relativ zum Führungskörper (9) mit einer vorbestimmten Bremskraft abbremsen.

## Claims

1. A drive roller unit for driving articles on a conveyor track comprising a drive roller (1) which can be driven in rotation by an electric motor means (8) by way of a planetary transmission (20) said drive roller being rotatably mounted on a guide body (9) by means of which it can be moved relative to a basis (2) between a lower rest position and an upper drive position in which said drive roller is in engagement with the underside of the article to be driven, wherein said drive roller (1) is substantially in the form of a hollow circular cylinder and the electric motor means (8), the guide body (9) and the planetary transmission (20) are arranged in the interior of the hollow cylindrical drive roller (1), wherein further the guide body (9) comprises circular-cylindrical outside peripheral surface areas onto which the drive roller (1) is concentrically supported, wherein at the inside of the hollow cylindrical drive roller (1) an internal gear ring (12) is mounted non-rotatably thereto and concentric with respect thereto, wherein the guide body (9) is rotatably mounted about an axis of rotation which is stationary with respect to the base (2) and which is excentric with respect to said circular-cylindrical outside peripheral surface areas of said guide body, and wherein the stator (82) of said electric motor means (8) being arranged in the interior of said guide body having the form of a hollow body, is fixedly connected to said guide body (9), characterized in that the internal ring gear (12) of the drive roller (1) forms a crown wheel of the planetary transmission (20), that a planet wheel (22) of the planetary transmission (20) meshes on the one hand with the internal ring gear (12) and on the other hand with a sun wheel (21) of the planetary transmission (20) which sun wheel is driven by the electric motor means (8), that the planet carrier (23, 23') of said planet wheel (22) is rotatably mounted in said guide body (9) concentrically with respect to said circular-cylindrical outside peripheral surface areas thereof, that the planet carrier (23, 23') is provided with a tooth means (25, 25') concentric with respect to said circular-cylindrical outside peripheral surface areas of the guide body (9), and that said tooth means (25, 25') is in meshing engagement with a guide gear (27) which is rigidly and non-rotatably connected to said base (2) and concentric with respect to said excentric axis of rotation of said guide body (9).

2. A drive roller unit according to claim 1, characterized in that the rotor (80) and the stator (82) of said electric motor means (8) are arranged concentrically relative to each other and concentrically relative to said circular-cylindrical outside peripheral surface areas of the guide body (9).

3. A drive roller unit according to any of claims 1 or 2, characterized in that the tooth means (25) of the planet carrier (23) is in the form of an internal gear ring which excentrically surrounds the guide gear (27) and which is concentric with respect to said circular-cylindrical outside peripheral surface areas of the guide body (9). (Fig. 1)

4. A drive roller unit according to any of claims 1 or 2, characterized in that the tooth means (25') of the planet carrier (23') is in the form of an external tooth means which is adapted to roll against the guide gear (27) and which is concentric with respect to said circular-cylindrical outside peripheral surface areas of the guide body (9). (Fig. 3)

5. A drive roller unit according to any preceding claim, characterized in that the bearings (13) mounting the drive roller (1) on the guide body (9) are adapted to brake the rotary movement of the drive roller (1) relative to the guide body (9) with a predetermined braking force.

## Revendications

1. Unité de rouleau d'entraînement utilisée pour l'entraînement d'objets sur un chemin de transport, comportant un rouleau d'entraînement (1), qui peut être entraîné en rotation par un dispositif à moteur électrique (8) par l'intermédiaire d'un engrenage planétaire (20) et qui est logé de manière à pouvoir tourner sur un corps de guidage (9), au moyen duquel il est déplaçable par rapport à une base (2) entre une position inférieure de repos et une position supérieure d'entraînement, dans laquelle il engrène en engagement avec le côté inférieur de l'objet devant être entraîné, dans laquelle le rouleau d'entraînement (1) est réalisé essentiellement sous la forme d'un cylindre circulaire creux, et le dispositif à moteur électrique (8), le corps de guidage (9) et l'engrenage planétaire (20) sont disposés à l'intérieur du rouleau d'entraînement cylindrique creux (1), où en outre le corps de guidage (9) présente, dans sa surface périphérique extérieure, des zones cylindriques circulaires, sur lesquelles le rouleau d'entraînement (1) est logé concentriquement, où au côté intérieur du rouleau d'entraînement cylindrique creux (1) est montée, d'une manière bloquée en rotation, une couronne dentée intérieure (12), qui est concentrique au rouleau, où le corps de guidage (9) est logé rotatif autour d'un axe de rotation fixe par rapport à la base (2) et excentré par rapport aux zones cylindriques circulaires de la surface périphérique extérieure du corps de guidage, et où le stator (82) du dispositif à moteur électrique (8) disposé à l'intérieur du corps de guidage (9) réalisé sous la forme d'un corps creux, est raccordé rigidement au corps de guidage (9), caractérisée en ce que la couronne dentée intérieure (12) du rouleau d'entraînement (1) est réalisée sous la forme d'une roue de chant de l'engrenage planétaire (20), qu'un pignon satellite (22) de l'engrenage planétaire (20) engrène d'une part avec la couronne dentée intérieure (12) et d'autre part avec une roue solaire (21), entraînée par le dispositif à moteur électrique (8), de l'engrenage planétaire (20), que le porte-satellite (23,23') de ce pignon sattelite (22) est logé dans le corps de guidage (9) de manière à pouvoir tourner concentriquement par rapport aux zones cylindriques circulaires de la surface périphérique extérieure de ce corps, que le porte-satellite (23,23') est pourvu d'une denture (25,25') qui est concentrique aux zones cylindriques circulaires de la surface périphérique extérieure du corps de guidage (9) et que cette denture (25,25') engrène avec une roue dentée de guidage (27) concentrique à l'axe de rotation excentré du corps de guidage (9) reliée rigidement et fixement en rotation avec la base (2).

2. Unité de rouleau d'entraînement selon la revendication 1, caractérisée en ce que le rotor (80) et le stator (82) du dispositif à moteur électrique (8) sont disposés concentriquement l'un par rapport à l'autre et par rapport aux zones cylindriques circulaires de la surface périphérique extérieure du corps de guidage (9).

3. Unité de rouleau d'entraînement selon l'une des revendications 1 ou 2, caractérisée en ce que la denture (25) du porte-satellite (23) est constituée sous la forme d'une couronne dentée intérieure qui enserre d'une manière excentrée la roue dentée de guidage (27) et est concentrique aux zones cylindriques circulaires de la surface périphérique extérieure du corps de guidage (9). (Figure 1).

4. Unité de rouleau d'entraînement selon l'une des revendications 1 ou 2, caractérisée en ce que la denture (25') du porte-satellite (23') est constituée sous la forme d'une denture extérieure qui roule sur la roue dentée de guidage (27) et est concentrique aux zones cylindriques circulaires de la surface périphérique extérieure du corps de guidage (9). (Figure 3).

5. Unité de rouleau d'entraînement selon l'une des revendications précédentes, caractérisée en ce que les paliers (13) du rouleau d'entraînement (1) situés sur le corps de guidage (9) freinent la rotation du rouleau d'entraînement (1) par rapport au corps de guidage (9), avec une force de freinage prédéterminée.
